# EUROPEAN PATENT APPLICATION

(11) **EP 3 009 862 A2**
(43) Date of publication of application: **20.04.2016**
(21) Application number: 14194829.9
(22) Date of filing: 26.11.2014
(51) Int. Cl.: G01T 1/29

(54) **Method of determining distortion and/or distortion correction for projection image obtained during computer tomography routine**

(30) Priority: 16.10.2014 PL 40981314
(71) Applicant: Uniwersystet Slaski w Katowicach, 40-007 Katowice (PL)
(72) Inventor: Bi kowski, Marcin, 40-175 Katowice (PL); Walczak, Micha, 41-250 Czelad (PL)
(74) Representative: Rumpel, Alicja

(57) **Abstract**

The subject of the invention comprises method of determination of distortion value and/or distortion correction value for a projection image obtained during computer tomography routine, with application, in particular, in control of the scanning process. The method is characterised in that during the first stage, during object scanning, the value of image distortion and/or its possible change present in individual projection images is determined, by determining the central point, namely the detector spot which receives the most intense irradiation from the X-ray source and/or by determination of calibration image and projection image parameter deviation and/or by comparison of projection images, including comparison of projection images with calibration images. The second stage includes an optional correction of projection image distortion, or when the distortion value exceeds the permitted limit during scanning, the scanning is automatically aborted, and the stage of projection image distortion correction takes place using the value of image distortion and/or its change determined during the first stage, or by skipping the first stage.

## Description

The subject of the invention comprises method of determination of distortion value and/or distortion correction value for a projection image obtained during computer tomography routine, with application, in particular, in control of the scanning process.

The X-ray computer tomography method comprises of recording so called tomographic projections which form the basis of computer reconstruction, aimed at obtaining two-dimensional images showing cross-sections of the studied object. These cross-sections may then be used as basis for computer reconstruction of a spatial model of density distribution of the studied object, and speaking more specifically, distribution of X-ray radiation absorption recorded in relative greyscale. Both two-dimensional cross-sections and the reconstructed, three-dimensional object are reconstructed with the most often accepted number and scope of artefacts. Among many artefacts, so called ring artefacts may be distinguished, occurring in the two-dimensional projection image, which may result from sensitivity differences between flat panel detectors. These differences result not only from an uneven electrical response to the radiation stream, depending on the detector, but also from the nonlinear character of this response as a function of radiation intensity, which may be similar for the detectors but will not be ideally equal.

The solutions known in the art usually correct the ring artefacts by applying a correction to the tomograph, which is performed by software operating the scanner. Before starting scanning, projection images for disconnected source are recorded (so called *offset*) and for connected source (so called *gain*), so called calibration images. *Offset* is a value read for every detector pixel with disconnected X-ray sources, this is value detected by detector without radiation reaching it. The *gain* value is a value for every detector pixel recorded at the specified intensity of X-ray radiation falling onto the detector. Most often, the *gain* value is recorded for at least one intensity value.

The *offset* value is recorded as image, which often results from an average result calculated on the basis of multiple single images. It enables to define the operational characteristics of individual detectors (sometimes understood as projection image pixels), which have similar, but not identical, characteristics as electronic systems. The *gain* value is recorded as a series of images (at least one image, maximum several images), for various radiation flux values. Modifications of this flux may take place on the basis of intensity changes or voltage changes of the X-ray source, or through filtering using filters with known parameters. Every *gain* image is an average result calculated on the basis of several individual images recorded by the detector for the given flux value of X-ray radiation, or a single image recorded for long-period exposure.

Use of *gain* and *offset* correction images created at the beginning of data acquisition provides an efficient method for determination of detector sensitivity to X-ray radiation.

Unfortunately, the aforementioned method is not an efficient method of distortion correction in case of increased distortion, because of anode wear, or parameter changes of the scanning sources during tomography measurements. In a correct situation, the X-ray radiation is running from the source towards the detector along a conical trajectory. In case of a correctly calibrated equipment, the cone axis indicates the very centre of the detector named the central point, forming a right angle with the detector plane. If image distortion occurs, for example, as a result of anode wear or deformation of the X-ray lamp during scanning, the cone axis forms an acute angle with the detector plane and the central point leaves the centre of the detector. Hitherto, no efficient correction method for this phenomenon has been known in the art.

The patent publication US2014008639A1 discloses a system and a method of geometry distortion correction in a flat panel detector. According to this invention, distortion correction requires use of a marker located inside the detector chamber, within a known distance from scintillation detectors and the marker located outside the detector chamber, and then parallax is calculated on the basis of the image obtained in X-rays. The proposed method has the disadvantage of necessity of marker use.

The aim of this invention is to create the possibility of practical determination of distortion values and distortion correction for an image in a computer tomograph, also during scanning. This solution may also be efficient when used in microtomography and nanotomography.

This task was successfully solved using a method of processing the projection image recorded during object scanning.

The method for determination of distortion and/or distortion correction values for a projection image obtained during the process of computer tomography according to the invention, wherein during the first stage, during object scanning, the image distortion value and/or its potential change occurring in individual projection images is determined, resulting from changes in geometry of X-ray radiation arriving at the detector. The indicated values are determined by determining the central point, namely the detector point with the highest intensity of irradiation by the X-rays source and/or by determining the deviation of parameter values for the calibration image and projection image and/or by comparisons of projection images, including comparison of projection images with calibration image. The second stage includes an optional correction of projection image distortion, or when the distortion value exceeds the permitted limit during scanning, the scanning is automatically aborted, and the projection image distortion correction takes place using the value of image distortion and/or its change determined during the first stage, or skipping the first stage, namely prior determination of distortion values or their changes.

In the variation with determination of the central point, the image distortion value and/or its potential change occurring at individual projection stages, resulting from changes in X-ray geometry reaching the detector, is preferably determined for a single image or, advantageously, for individual projection images, by comparing the coordinates of the determined central point with coordinates of the central point in the theoretical projection image and/or, advantageously, by comparing coordinates of the determined central point with coordinates of the central point in the calibration image. The result of this comparison, namely the difference between the indicated coordinates, forms the value of previously determined distortion or its change. Then, an optional projection image correction takes place, using the original calibration image shifted against the given projection by the determined distortion value and advantageously filtered, then multiplied by result of division of the original, unshifted projection by its filtered counterpart.

Preferably, in the variation with determination of parameter value deviation for the calibration image and for the projection image, the value of image distortion and/or its potential change occurring at individual projection images, resulting from changes in geometry of the X-rays arriving at the detector is determined for a single image, or advantageously, for individual projection images in such a way, that correlation between the calibration image and between individual protection image is calculated, then the images are shifted against one another in order to obtain the maximum value of correlation coefficient, while the final image distortion value and/or of its potential change comprises the vector if calibration image shift against the individual projection image, with optional correction of the projection image using the shifted image takes place, forming a new calibration image which is used for projection calibration according to the method known in the art.

Preferably, the variation with comparison of projection images, including comparison of projection images with the calibration image, on the basis of projection image or images of radiation reaching the detector during scaling of the studied object, measurements of X-ray intensity, described by greyscale, take place, for radiation reaching at least one, advantageously the top detector part, or one or both sides of the detector,
and the intensity of X-ray radiation at the detector is presented as a unidirectional vector, on the basis of which a mathematical function, preferably a polynomial function, forming interpolation of values stored in the vector, is determined. Then, for every detector edge, on the basis of X-ray intensity at the edge of detector, preferably on the basis of the indicated mathematical function, the maximum intensity is calculated, corresponding to the brightest irradiated spot on the edge, next, using the values from the top and one of the side edges, a point is determined, corresponding to the cross-section of the pixel column in which the brightest top edge spot is located, with the pixel row where the brightest side edge spot is located, and the cross-section location indicates the point of intensity maximum for the given projection, where in the variant using both side edges, in order to increase the measurement precision, maximum irradiation intensity values for the right and left edge of the detector is determined, and then this spot with double coordinates is used for comparison of spots in such a way that the spot determined for the particular projection is used as a reference spot for the next projection, advantageously for every subsequent projection, and the determined coordinate differences for determined spots with maximum intensity are used as basis for determination of the final distortion value and/or its potential change occurring in individual projection images, resulting from changes in geometry of X-rays reaching the detector. Then, an optional projection image correction takes place, using the original calibration image shifted against the given projection by the determined distortion value and advantageously filtered, then multiplied by result of division of the original, unshifted projection by its filtered counterpart.

In an embodiment of the invention skipping the first stage, namely the stage of distortion value determination for the given projection, projection image correction takes places immediately, using the newly created calibration image *gain,* which is created in such a way that using values for the top and right and/or left side edges of the projection image, 1 per x and y per 1 vectors are created, where x corresponds to image width and y is its height, matrix multiplication is performed in order to obtain a x per y matrix which is then multiplied by the initial calibration image, and using thus obtained, new calibration image, current projection image is corrected using a method known in the art, simultaneously correcting the image of the current projection, preserving characteristics of individual pixels, with the side profiles, forming vectors, are advantageously filtered before matrix multiplication.

The use of method according to the invention does not require changes in the scanning process nor performing any additional operations nor use of additional elements requiring scanning, such as markers or templates. In addition, because of the nature of calculations, the method according to the invention does not require use of additional computer equipment, and it can be performed using just the computer used for reconstruction.

The solution according to the invention enables determination of image distortion changes during scanning, and in the case of exceeding a specified distortion value it enables the scanning process to be aborted, advantageously with a message notifying about exceeding the maximum permitted distortion value.

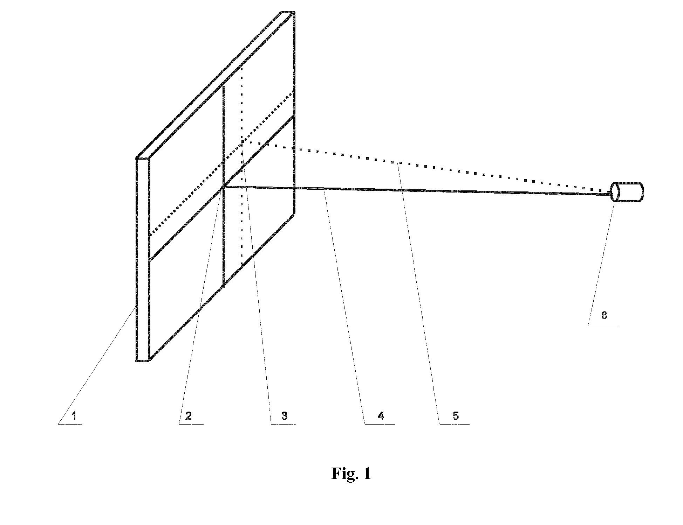

The subject of the invention will now be described in more detail, using an exemplary embodiment depicted on the drawing in which fig. 1 presents the scanner system with the marked radiation geometry axis in case of distortion occurrence. Individual references on the figure indicate: 1 - detector; 2 - detector centre and theoretical central point of the projection image; 3 - X-rays geometry axis for the theoretical image; 4 - central point of the projection image if distortion occurs; 5 - X-rays geometry axis if distortion occurs; 6 - X-ray source.

### Example 1.

During object scanning in an X-ray computer microtomograph equipped with a flat panel detector of 2024x2024 pixel size, the minimum value for image distortion defined in pixels for vertical and horizontal coordinate was determined, as equal to (±50,±50). A calibration image was recorded before the scanning was started. On the basis of projection images, the value of image distortion present in individual images was determined, resulting from geometry changes of X-rays reaching the detector.

The central point, namely the detector point with the maximum irradiation intensity from the X-ray source was determined for individual projection images, determining the maximum intensity on the projection image. Central point coordinates determined for the calibration image equalled (1000,1042). Central point coordinates determined for projection images equalled (1005,1022). On the basis of difference between point coordinates, the distortion value for projection image was determined, equal to (+5,-20). Then, using the determined distortion value for individual projections, projection image correction was performed using the original calibration image offset against the individual projection by the determined distortion value (+5,-20). Thus a projection image was obtained which can be used for reconstruction of image devoid of artefacts resulting from drift of scanning parameters.

If the distortion value exceeds the initially permitted value during scanning, reaching value of the particular coordinate differing by more than 50 pixels, the scanning process would be automatically aborted.

### Example 2.

During object scanning in an X-ray computer microtomograph equipped with a flat panel detector of 2024x2024 pixel size, the minimum value for image distortion defined in pixels for vertical and horizontal coordinate was determined, as equal to (±50,±50). A calibration image was recorded before the scanning was started. On the basis of projection images, the value of image distortion present in individual images was determined, resulting from geometry changes of X-rays reaching the detector.

The value of image distortion was determined for individual projection image in such a way that correlation between the calibration image and images for individual projection was calculated. For example, correlation value for one of the calibrated projections equalled 0,65, then the images were offset against each other by 10 pixels, vertically, and the correlation was recalculated. The correlation value reached 0,78 this time. After another vertical shift of the image by 10 pixels the correlation value equalled 0,60 and the images were shifted until the value of vertical offset yielding the highest correlation value was found, in this case it was equal to 0,81 and this value was reached for vertical offset of 12 pixels. After the vertical offset was determined, the correlation value was studied for horizontal offset, reaching the highest correlation equal 0,88 for a -23 pixels shift. Thus, the final value of distortion for the individual projection image was equal to the offset vector of the calibration image against the individual projection image, equal to (-23,12). Following a similar rule, distortion values for other projections was determined. Then the original calibration image was offset against the particular projection by the (-23,12) vector, forming a new calibration image, which was used for projection calibration according to the method known in the art, namely the method implemented in the software of scanner manufacturer, which performs projection correction using the newly formed calibration image. The process of forming a new calibration image for every projection was repeated using new distortion value calculated every time.

If the distortion value exceeds the initially permitted value during scanning, reaching value of the particular coordinate differing by more than 50 pixels, the scanning process would be automatically aborted.

### Example 3.

During object scanning in an X-ray computer microtomograph equipped with a flat panel detector of 2024x2024 pixel size, the minimum value for image distortion defined in pixels for vertical and horizontal coordinate was determined, as equal to (±50,±50). A calibration image was recorded before the scanning was started. On the basis of projection images, the value of image distortion present in the first and the last projection images was determined, resulting from geometry changes of X-rays reaching the detector. During scanning of the studied object, X-ray intensity was measured, described by greyscale, for radiation reaching the top part and both sides of the detector, and the X-ray intensity at the detector recorded in the projection image was presented as unidimensional vector, for which a second-order polynomial function described by equation y=ax²+bx+c was determined, the function being an interpolation of values stored in the vector. Then, for each edge of the first projection image, using the determined mathematical function, maximum intensity was calculated, corresponding to the brightest irradiation spot on the edge, then using values for the top edge and for one of the side edges, a spot was determined, forming the cross-section of the column of pixels in which the brightest spot of the top edge can be found, and of the row of pixels where the brightest spot of the side edge can be found. The cross-section point corresponding to the maximum intensity point for the first projection had its coordinates equal to (1012,1012). In a similar way, coordinates for the central point for the last projection were determined and they were equal to (992,1022). In order to compare spots, using the determined coordinate differences from determined points with maximum intensity, the final distortion value equal to (-20,10) was determined, resulting from changes in X-ray geometry of rays reaching the detector. The projection image was corrected using the original calibration image which was filtered and then offset against the particular projection by the determined distortion value equal to (-20,10). In the next stage, this image was multiplied by the product of division of the original, unshifted projection by its filtered counterpart, obtaining projection image which could be used for reconstruction of the image devoid of artefacts resulting from drift of scanning parameters.

If the distortion value exceeds the initially permitted value during scanning, reaching value of the particular coordinate differing by more than 50 pixels, the scanning process would be automatically aborted.

### Example 4.

During object scanning in an X-ray computer microtomograph equipped with a flat panel detector of 2024x2024 pixel size, the minimum value for image distortion defined in pixels for vertical and horizontal coordinate was determined, as equal to (±50,±50). A calibration image was recorded before the scanning was started. During scanning, correction of the projection image using the newly formed calibration image *gain,* was performed, which was formed in such a way that side profiles were determined, forming vectors of 1 per 2024 and 2024 per 1 size, which were then subjected to matrix multiplication, obtaining a 2024 per 2024 sized matrix which was then multiplied by the original calibration image. Then the newly obtained calibration image was written over the old image in order for the scanner operating software to use for correction of projection according to the standard method used in microtomography, thus the current projection image was corrected, taking into account distortion corrections for this image and preserving the characteristics of individual pixels.

If the distortion value exceeds the initially permitted value during scanning, reaching value of the particular coordinate differing by more than 50 pixels, the scanning process would be automatically aborted.

The method according to the invention may be used, in particular, for correction of projection images in uses of such tomographic tests, during which scanner parameters drift was observed.

## Claims

1. The method for determination of distortion and/or distortion correction values for projection image obtained during a computer tomography routine, **characterised in that** in the first stage, during object scanning, distortion and/or its correction in individual projection images is determined on the basis of projection images, resulting from X-ray geometry change for rays reaching the detector, by determining the central spot, namely the detector spot with the highest irradiation intensity from the X-rays source and/or by determining the deviation of parameter values for the calibration image and for projection image and/or by comparison with projection image, including comparison of projection images with the calibration image, and in the second stage, optional correction of projection image distortion takes place, or in the case when distortion value exceeds the maximum value permitted during scanning, the scanning process is automatically aborted and the stage of protection image distortion correction takes place using the value of image distortion and/or its change determined during the first stage, or with skipping the first stage.

2. Method according to claim. 1, **characterised in that** in the variation with central point determination, the value of image distortion and/or its potential change occurring at individual projection stages, resulting from changes to the X-ray geometry for rays reaching the detector, is determined for a single image or, advantageously, for individual projection images, by comparing the coordinates of the determined central point with coordinates of the central point in the theoretical projection image and/or, advantageously, by comparison of coordinates for the determined central point with coordinates of the central point in the calibration image, after which an optional correction of projection image takes place using the original calibration image offset against the particular projection by the determined distortion value and advantageously filtered, and then multiplied by the result of dividing the original, unshifted projection by its filtered counterpart.

3. Method according to claim. 1, **characterised in that** in the variation with determination of parameter value deviation for the calibration image and for the projection image, the value of image distortion and/or its potential change occurring at individual projection images, resulting from changes in geometry of the X-rays arriving at the detector is determined for a single image, or advantageously, for individual projection images in such a way, that correlation between the calibration image and between individual protection image is calculated, then the images are shifted against one another in order to obtain the maximum value of correlation coefficient, while the final image distortion value and/or of its potential change comprises the vector if calibration image shift against the individual projection image, with optional correction of the projection image using the shifted image takes place, forming a new calibration image which is used for projection calibration according to the method known in the art.

4. Method according to claim. 1, **characterised in that** in the variation with comparison of projection image, including comparison of projection images with the calibration image, on the basis of projection image or of the images of radiation reaching the detector during scanning of the studied object, measurements of X-ray intensity, expressed as greyscale, are performed, for rays reaching at least one, preferably top part of the detector or one or both sides of the detector, and X-ray intensity at the detector recorded in the projection image is presented as a unidimensional vector, on the basis of which a mathematical function is determined, advantageously a polynomial function, forming interpolation of values stored in the vector, then, for every side of the projection image, on the basis of X-ray intensity, preferably on the basis of the determined mathematical function, maximum intensity value is calculated, forming the brightest irradiation spot on the edge, then, using values from the top and one of the side edges, a spot forming the cross-section between the column of pixels containing the brightest spot of the top edge, and the pixel row in which the brightest spot on the side edge is located is found, and the cross-section location determines the spot for which the intensity reaches maximum for the given projection, where in the variation using both side edges, in order to improve the measurement accuracy, maximum irradiation values determined for the right and the left edge of the projected image are averaged, and thus determined spot with two coordinates is then used as a reference spot for the next projection, preferably for every subsequent projection, and on the basis of measured coordinate differences for determined spots with maximum intensity, the final distortion value and/or its potential change is determined, existing for individual projection images, resulting from the change of X-ray geometry for rays reaching the detector, then, optionally, projection image correction takes place using the original calibration image offset against the particular projection by the determined distortion value and preferably filtered, and then multiplied by the result of division of the original, unshifted projection, by its filtered counterpart.

5. Method according to claim. 1, **characterised in that** with skipping the first stage, projection image correction takes place using the newly created calibration image *gain,* which is created in such a way that using values for the top and right and/or left side edges of the projection image, 1 per x and y per 1 vectors are created, where x corresponds to image width and y is its height, matrix multiplication is performed in order to obtain a x per y matrix which is then multiplied by the initial calibration image, and using thus obtained, new calibration image, current projection image is corrected using a method known in the art, simultaneously correcting the distortion of the image, preserving characteristics of individual pixels.

6. Method according to claim. 5, **characterised in that** side profiles, which are vectors, are preferably filtered before the matrix multiplication.
